# EUROPÄISCHE PATENTSCHRIFT

(11) **EP 2 243 615 B1**
(45) Veröffentlichungstag und Bekanntmachung des Hinweises auf die Patenterteilung: **23.08.2017**
(21) Anmeldenummer: 10003054.3
(22) Anmeldetag: 23.03.2010
(51) Int. Cl.: B29C 45/67

(54) **Spritzgiessmaschine**
Injection moulding machine
Machine à mouler par injection

(30) Priorität: 20.04.2009 DE 102009018096
(43) Veröffentlichungstag der Anmeldung: 27.10.2010
(73) Patentinhaber: Wittmann Battenfeld GmbH, 2542 Kottingbrunn (AT)
(72) Erfinder: Schaly, Gerhard, 2542 Kottingbrunn (AT); Pinter, Jürgen, 9022 Schattendorf (AT); Lechner, Andreas, 2362 Pottenstein (AT)
(74) Vertreter: Gosdin, Michael

(56) Entgegenhaltungen:
- EP-A1- 1 369 218
- DE-A1- 2 100 868
- DE-A1- 19 606 568
- JP-A- 8 309 811
- JP-A- 2004 009 301
- US-A1- 2007 048 401

## Beschreibung

Die Erfindung betrifft eine Spritzgießmaschine, umfassend ein Maschinenbett, auf dem eine feste Werkzeugaufspannplatte angeordnet ist, wobei auf dem Maschinenbett weiterhin eine verschiebbare Werkzeugaufspannplatte angeordnet ist, die relativ zu der ersten Werkzeugaufspannplatte in eine Schließrichtung verschieblich ist, wobei an der einen Werkzeugaufspannplatte eine Anzahl Holme befestigt sind, die zur Aufbringung einer Werkzeugschließkraft relativ zur anderen Werkzeugaufspannplatte mittels Verriegelungsmitteln verriegelbar sind, wobei die Verriegelungsmittel aufweisen:
- mindestens eine Ausnehmung im endseitigen Bereich des Holms,
- ein Eingriffselement, das mindestens einen Vorsprung aufweist, der zur Festlegung des Holms relativ zu der das Eingriffselement tragenden Werkzeugsaufspannplatte in die mindestens eine Ausnehmung eingreifen kann,
wobei das Eingriffselement mindestens zwei Teile aufweist, wobei jedes Teil um einen Drehpunkt drehbar gelagert ist und eine Drehung um eine Achse ausführen kann, die in Schließrichtung weist, wobei das Eingriffselement in Schließrichtung unverschieblich in der einen Werkzeugaufspannplatte angeordnet ist und wobei Synchronisationsmittel vorhanden sind, mit denen die Schwenkbewegung der Teile des Eingriffselements um die Achse synchronisiert werden kann.

Eine Spritzgießmaschine dieser Art ist in der DE 196 06 568 A1 beschrieben. Maschinen dieser Bauart werden als Zwei-Platten-Maschinen bezeichnet und haben den Vorteil, dass auf eine (dritte) Platte verzichtet werden kann, wie es der typischen Bauart einer Spritzgießmaschine entspricht. Das Maschinenkonzept kommt vor allem für größere und große Bauformen von Spritzgießmaschinen in Betracht. Ähnliche Lösungen sind aus der DE 21 00 868 A1, aus der JP 2004 009301 A**,** aus der JP 8 309811 A, aus der WO 02/098627 A1**,** aus der DE 10 2006 016 343 A1**,** aus der DE 103 23 309 B4 und aus der AT 399 843 B bekannt. Eine weitere ähnliche Lösung zeigt die EP 1 369 218 A1**,** bei der ein Verriegelungsmechanismus mittels exzentrisch angeordneter Wellen betätigt wird. Durch Verdrehen der Wellen um 180° wird eine radiale Verschiebung von translatorisch verschieblich gelagerten Verriegelungselementen bewerkstelligt, so dass die Verriegelungselemente entweder formschlüssig in einen Holm eingreifen oder diesen freigeben.

Um einen Produktionsbetrieb mit möglichst kurzen Nebenzeiten zu erreichen, ist es erforderlich, dass nach dem Zusammenfahren der beiden Werkzeugaufspannplatten diese mittels der Holme schnell und sicher verspannt werden, um die Werkzeugschließkraft aufbringen zu können.

Die vorbekannten Systeme sind diesbezüglich nicht immer voll zufriedenstellend.

Der Erfindung liegt daher die Aufgabe zugrunde, eine Spritzgießmaschine der eingangs genannten Art, also eine Zwei-Platten-Maschine, so auszuführen, dass der Verschluss der Holme mit der einen Werkzeugaufspannplatte nach dem Zusammenfahren der Werkzeughälften schnell und sicher erfolgt, wobei eine einfache und somit kostengünstige Konstruktion angestrebt wird. Dabei soll insbesondere sichergestellt werden, dass sich eine vollständige, schnelle Verriegelung ergibt, wenn das mindestens eine Eingriffselement geschlossen wird.

Die Lösung dieser Aufgabe durch die Erfindung ist dadurch gekennzeichnet, dass die Synchronisationsmittel ein kreisringförmiges Steuerelement aufweisen, das über einen Aktuator in Umfangsrichtung gedreht werden kann, wobei die Teile des Eingriffselements mittels einer gelenkigen Lagerung an dem Steuerelement gelagert sind.

Das Eingriffselement ist bevorzugt als das Ende des Holms umgebende Mutter ausgebildet. Es ist dabei vorzugsweise genau zweiteilig ausgebildet.

Das Eingriffselement kann eine Mehrzahl an Vorsprüngen aufweisen. Der Holm kann dabei mehr Ausnehmungen aufweisen als das Eingriffselement Vorsprünge. Damit ist es in einfacher Weise möglich, unterschiedliche Werkzeugeinbauhöhen einzustellen.

Die mindestens eine Ausnehmung im endseitigen Bereich des Holms kann als Eindrehung ausgebildet sein. Die Eindrehung ist dabei bevorzugt ringnutförmig ausgebildet.

Die Teile des Eingriffselements können einen hülsenförmigen Abschnitt aufweisen, entlang dem sich in Schließrichtung eine Mehrzahl an Vorsprüngen erstreckt, wobei die radial außenliegende Fläche des hülsenförmigen Abschnitts konisch ausgebildet ist. Hierdurch wird eine sich dehnende Konstruktion ermöglicht, in der sich Spannungen besser verteilen können.

Die mindestens eine Ausnehmung kann in radiale Richtung betrachtet hinterschnitten ausgebildet sein, wobei der mindestens eine Vorsprung eine der hinerschnittenen Form der Ausnehmung angepasste Form aufweist. Hierdurch wird im geschlossenen bzw. verriegelten Zustand ein Verkrallungseffekt erzeugt, der vorteilhaft sein kann.

Der Aktuator ist dabei bevorzugt als hydraulisch betätigtes Element ausgebildet.

Das kreisringförmige Steuerelement kann als dünner Blechring ausgeführt sein Die gelenkige Lagerung kann Hebellaschen umfassen, die über je einen Lagerpunkt mit dem Steuerelement und dem Teil des Eingriffselements verbunden sind. Die Lagerpunkte können weiterhin einen sich in Schließrichtung erstreckenden Lagerbolzen aufweisen.

In der Werkzeugaufspannplatte, in der die Verriegelungsmittel nicht angeordnet sind, können die Mittel zur Aufbringung der Werkzeugschließkraft angeordnet sein, die zwischen der Werkzeugaufspannplatte und den Holmen wirken. Diese Mittel können zur Aufbringung der Werkzeugschließkraft als hydraulische Druckdosen ausgebildet sein.

Vorzugsweise sind mehrere Verriegelungsmittel der Spritzgießmaschine mit Kopplungsmitteln versehen, die eine synchrone Betätigung der Verriegelungsmittel ermöglichen.

Die Verriegelung der Holme relativ zu der einen Werkzeugaufspannplatte wird also über (mindestens) zwei Mutterhälften bewerkstelligt, die jeweils über einen Drehpunkt verschwenkt werden können. Durch den sehr geringen Hub, d. h. durch den geringen benötigten Schwenkwinkel erreicht man eine sehr kurze Verschluss- und Öffnungszeit.

Die komplette Verrieglung ist bevorzugt in die eine der Werkzeugaufspannplatten integriert.

An welcher Werkzeugaufspannplatte die Holme befestigt und die Verriegelung angeordnet ist, ist nicht zwingend. Bevorzugt trägt die feste Werkzeugaufspannplatte die Holme, während die bewegliche Werkzeugaufspannplatte die Verrieglung trägt.

In der Zeichnung ist ein Ausführungsbeispiel der Erfindung dargestellt. Es zeigen:
- Fig. 1: schematisch die Seitenansicht einer Spritzgießmaschine, die als Zwei-Platten-Maschine ausgeführt ist,
- Fig. 2: in geschnittener Ansicht einen Endbereich eines Holms der Spritzgießmaschine, der von Verriegelungsmitteln in einer der Werkzeugaufspannplatten verriegelt wird, und
- Fig. 3: die Verriegelungsmittel gemäß Fig. 2 in der Ansicht B gemäß Fig. 2.

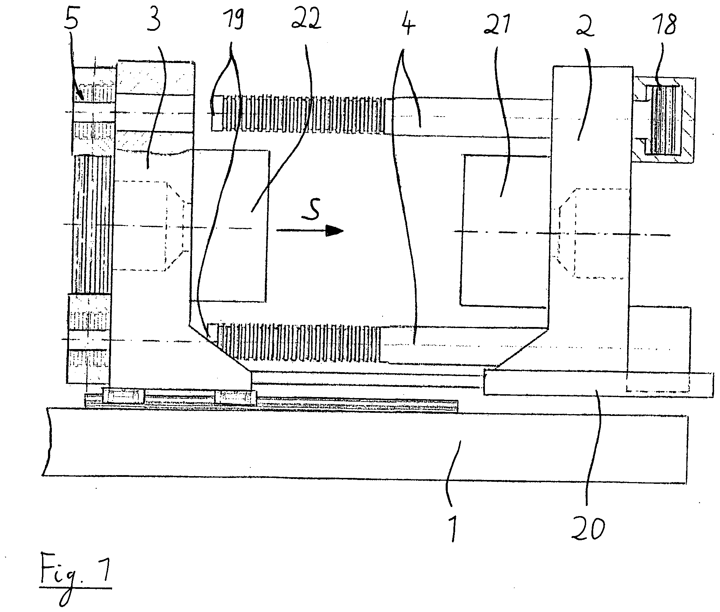

In Fig. 1 ist eine Spritzgießmaschine dargestellt, die ein Maschinenbett 1 aufweist, auf der eine feste Werkzeugaufspannplatte 2 (Düsenplatte) fest angeordnet ist. Weiterhin ist eine verschiebbare Werkzeugaufspannplatte 3 (Schließplatte) auf dem Maschinenbett 1 verschieblich angeordnet, die in Schließrichtung S auf dem Maschinenbett 1 verfahren kann. Die Verfahrbewegung der Werkzeugaufspannplatte 3 erfolgt über mindestens einen Fahrzylinder 20.

An der festen Werkzeugaufspannplatte 2 sind Holme 4 angeordnet, wobei der endseitige Bereich 19 der Holme 4 beim Zusammenfahren der beiden Werkzeugaufspannplatte 2, 3 in Bohrungen in der verschiebbaren Werkzeugaufspannplatte 3 eintaucht.

Durch Verriegelungsmittel 5, die in Fig. 1 nicht näher dargestellt sind, werden dann die Holme 4 mit der Werkzeugaufspannplatte 3 verriegelt. Kurzhubzylinder 18, die in der Werkzeugaufspannplatte 2 integriert sind, können dann die Werkzeugschließkraft aufbringen, d. h. die beiden Werkzeughälften 21 und 22 verspannen.

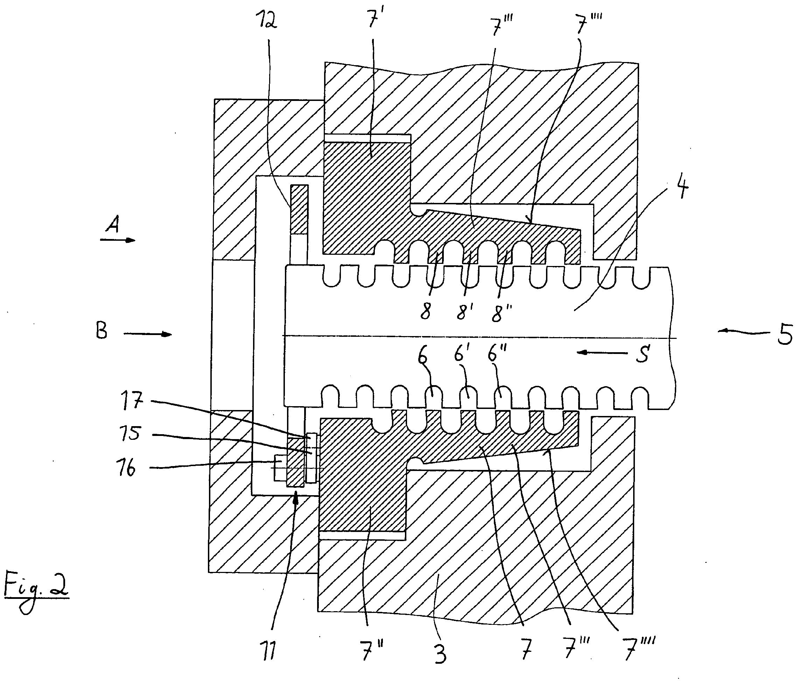

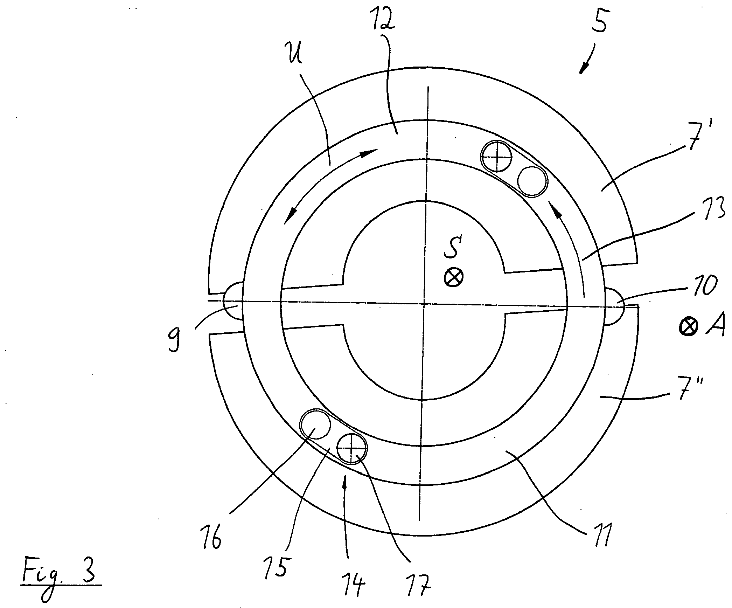

Details zum Aufbau der Verriegelungsmittel 5 gehen aus der Zusammenschau der Figuren 2 und 3 hervor.

Im endseitigen Bereich 19 der Holme 4 sind Ausnehmungen 6, 6', 6", ... eingebarbeitet. Es handelt sich hierbei um ringnutartige Eindrehungen, die - wie es in Fig. 2 gesehen werden kann - einen leichten Hinterschnitt aufweisen.

In der beweglichen Werkzeugaufspannplatte 3 ist ein Eingriffselement 7 angeordnet. Das Eingriffselement 7 bildet eine Mutter und besteht vorliegend aus zwei Hälften 7' und 7". Die beiden Hälften 7', 7" sind in der Werkzeugaufspannplatte 3 in Schließrichtung S unverschieblich angeordnet. Eine jede Hälfte 7', 7" hat einen sich in Schließrichtung S erstreckenden hülsenförmigen Abschnitt 7"'. Am radial innenliegenden Umfang des hülsenförmigen Abschnitts 7'" sind sich radial erstreckende Vorsprünge 8, 8', 8", ... angeordnet. Diese haben im Radialschnitt, der in Fig. 2 zu sehen ist, eine Form, die derjenigen der Ausnehmungen 6, 6', 6" entspricht. Der radial außenliegende Umfang 7"" des hülsenförmigen Abschnitts 7" weist eine konische Form auf.

Wie weiter zu sehen sind (s. hierzu Fig. 3), sind die beiden Teile 7', 7" des Eingriffselements 7 an zwei Drehpunkten 9 und 10 exzentrisch zur Holmachse schwenkbar gelagert, d. h. die Teile 7', 7" können um eine Achse A schwenken, die parallel zur Schließrichtung S liegt.

Bei Eintauchen des Holms 4 mit seinem endseitigen Bereich 19 in das Eingriffselement 7 sind demgemäß die beiden Teile 7', 7" so geschwenkt, dass ein Eintritt des Holms 4 problemlos möglich ist. Befindet sich der Holm 4 relativ zum Eingriffselement 7 in der gewünschten Arretierungsstellung, werden die beiden Teile 7', 7" so um die Achse A verschwenkt, dass die Vorsprünge 8, 8', 8" in die Ausnehmungen 6, 6', 6" eingreifen und so eine Fixierung des Holme 4 relativ zur Werkzeugaufspannplatte 3 herstellen.

Das gleichmäßige und gleichzeitige Öffnen und Schließen der Teile 7', 7" des Eingriffselements 7 wird durch Synchronisationsmittel 11 erreicht, die insbesondere in Fig. 3 dargestellt sind. Diese Mittel weisen ein kreisringförmiges Steuerelement 12 auf, das mit einem Aktuator 13 in Umfangsrichtung U gedreht werden kann. Die beiden Teile 7', 7" des Eingriffselements 7 sind über gelenkige Lagerungen 14 mit dem Steuerelement 12 verbunden. Hierfür sind im Ausführungsbeispiel zwei Lagerpunkte 16 und 17 vorgesehen, die jeweils durch einen sich in Schließrichtung S erstreckenden Lagerbolzen gebildet werden. An den beiden Lagerpunkten 16 und 17 ist eine Hebellasche 15 angelenkt. Wird nun das Steuerelement 12 vom Aktuator 13 in Umfangsrichtung U gedreht, führt dies zu einem Verschwenken der beiden Teile 7', 7" des Eingriffselements 7 in den Drehpunkten 9 und 10 um die Achse A und somit zu einem Öffnen bzw. Schließen der Teile 7', 7", so dass entweder die Vorsprünge 8, 8', 8" aus den Ausnehmungen 6, 6', 6" herausgezogen oder in diese eingeschoben werden.

Die genannte Synchronisierung der Betätigung der beiden Teile 7', 7" kann alternativ auch über mehrere pneumatische oder hydraulische Betätigungszylinder erfolgen.

Als Mittel 18 zur Aufbringen der Werkzeugschließkraft kommen bevorzugt Kurzhubdruckdosen an der Düsenplatte zum Einsatz.

Der Holm 4 hat bevorzugt eine größere Anzahl von Ausnehmungen 6, 6', 6", so dass verschiedene Einbauhöhen des Werkzeugs problemlos gespannt werden können.

Die Verriegelungsmittel 5 sind bevorzugt, aber nicht zwingend an der Schließplatte angeordnet.

Das im Ausführungsbeispiel zweiteilige Eingriffselement 7 ist als Dehnmutter ausgeführt. Die konische Ausgestaltung der Außenfläche des hülsenförmigen Abschnitts 7'" führt zu einem weitgehend konstanten Spannungszustand in den Verriegelungseinstichen (Ausnehmungen 6, 6', 6") des Holms 4 und der Mutter (Eingriffselement 7). Die Spannungen werden daher weitgehend gleichmäßig auf alle Ausnehmungen (Einstiche) verteilt.

Mehrere Verriegelungsmittel 5 der Spritzgießmaschine (insbesondere vier Verriegelungsmittel für vier Holme) können durch eine mechanische Kopplung miteinander synchronisiert werden.

Die Verriegelungsmittel 5 sind bevorzugt in die Schließplatte integriert. Hierdurch ergibt sich eine sehr kurze Baulänge der Holme.

Die hinterschnitten ausgebildeten Ausnehmungen 6, 6', 6" und die korrespondierend ausgeformten Vorsprünge 8, 8', 8" erlauben einen Verkrallungseffekt beim Eingriff. Hierdurch kann ein unbeabsichtigtes Lösen der Verriegelung erschwert bzw. verhindert werden. Ein Öffnen der Teile 7', 7" wird erschwert.

Vorteilhaft ist es, wenn die Stellung der Teile 7', 7" des Eingriffselement 7 mittel geeigneter Sensoren überwacht wird.

Die Betätigungselemente der Teile 7', 7" können mit einer Endlagendämpfung versehen sein.

Vorteilhaft sind die relativ kurzen Betätigungswege der Teile 7', 7" um vom verriegelten zum entriegelten Zustand der Teile zu kommen und umgekehrt.

Wenngleich dies nicht der bevorzugten Ausführungsform der Erfindung entspricht, kann auch in kinematischer Umkehr vorgesehen sein, dass der Holm mit Vorsprüngen ausgestattet ist, die in Ausnehmungen im Eingriffselement eingreifen.

### Bezugszeichenliste:

- 1: Maschinenbett
- 2: feste Werkzeugaufspannplatte (Düsenplatte)
- 3: verschiebbare Werkzeugaufspannplatte (Schließplatte)
- 4: Holm
- 5: Verriegelungsmittel
- 6: Ausnehmung
- 6': Ausnehmung
- 6": Ausnehmung
- 7: Eingriffselement
- 7': Teil des Eingriffselements
- 7": Teil des Eingriffselements
- 7'": hülsenförmiger Abschnitt
- 7"": radial außenliegende Fläche des hülsenförmigen Abschnitts
- 8: Vorsprung
- 8': Vorsprung
- 8": Vorsprung
- 9: Drehpunkt
- 10: Drehpunkt
- 11: Synchronisationsmittel
- 12: kreisringförmiges Steuerelement
- 13: Aktuator
- 14: gelenkige Lagerung
- 15: Hebellasche
- 16: Lagerpunkt
- 17: Lagerpunkt
- 18: Mittel zur Aufbringung der Werkzeugschließkraft
- 19: endseitiger Bereich des Holms
- 20: Fahrzylinder
- 21: Werkzeughälfte
- 22: Werkzeughälfte

- S: Schließrichtung
- A: Achse
- U: Umfangsrichtung

## Patentansprüche

1. Spritzgießmaschine, umfassend ein Maschinenbett (1), auf dem eine feste Werkzeugaufspannplatte (2) angeordnet ist, wobei auf dem Maschinenbett (1) weiterhin eine verschiebbare Werkzeugaufspannplatte (3) angeordnet ist, die relativ zu der ersten Werkzeugaufspannplatte (2) in eine Schließrichtung (S) verschieblich ist, wobei an der einen Werkzeugaufspannplatte (2) eine Anzahl Holme (4) befestigt sind, die zur Aufbringung einer Werkzeugschließkraft relativ zur anderen Werkzeugaufspannplatte (3) mittels Verriegelungsmitteln (5) verriegelbar sind,
wobei die Verriegelungsmittel (5) aufweisen:
- mindestens eine Ausnehmung (6, 6', 6") im endseitigen Bereich (19) des Holms (4),
- ein Eingriffselement (7), das mindestens einen Vorsprung (8, 8', 8") aufweist, der zur Festlegung des Holms (4) relativ zu der das Eingriffselement (7) tragenden Werkzeugsaufspannplatte (3) in die mindestens eine Ausnehmung (6, 6', 6") eingreifen kann,
wobei das Eingriffselement (7) mindestens zwei Teile (7', 7") aufweist, wobei jedes Teil um einen Drehpunkt (9, 10) drehbar gelagert ist und eine Drehung um eine Achse (A) ausführen kann, die in Schließrichtung (S) weist, wobei das Eingriffselement (7) in Schließrichtung (S) unverschieblich in der einen Werkzeugaufspannplatte (3) angeordnet ist und wobei Synchronisationsmittel (11) vorhanden sind, mit denen die Schwenkbewegung der Teile (7', 7") des Eingriffselements (7) um die Achse (A) synchronisiert werden kann, wobei die Synchronisationsmittel (11) ein kreisringförmiges Steuerelement (12) aufweisen, das über einen Aktuator (13) in Umfangsrichtung (U) gedreht werden kann, wobei die Teile (7', 7") des Eingriffselements (7) mittels einer gelenkigen Lagerung (14) an dem Steuerelement (12) gelagert sind.

2. Spritzgießmaschine nach Anspruch 1, **dadurch gekennzeichnet, dass** das Eingriffselement (7) als das Ende des Holms (4) umgebende Mutter ausgebildet ist, wobei das Eingriffselement (7) insbesondere zweiteilig ausgebildet ist.

3. Spritzgießmaschine nach Anspruch 1 oder 2, **dadurch gekennzeichnet, dass** das Eingriffselement (7) eine Mehrzahl an Vorsprüngen (8, 8', 8") aufweist.

4. Spritzgießmaschine nach Anspruch 3, **dadurch gekennzeichnet, dass** der Holm (4) mehr Ausnehmungen (6, 6', 6") aufweist als das Eingriffselement (7) Vorsprünge (8, 8', 8").

5. Spritzgießmaschine nach einem der Ansprüche 1 bis 4, **dadurch gekennzeichnet, dass** die mindestens eine Ausnehmung (6, 6', 6") im endseitigen Bereich des Holms (4) als Eindrehung, insbesondere als ringnutförmige Eindrehung, ausgebildet ist.

6. Spritzgießmaschine nach einem der Ansprüche 1 bis 5, **dadurch gekennzeichnet, dass** die Teile (7', 7") des Eingriffselements (7) einen hülsenförmigen Abschnitt (7'") aufweisen, entlang dem sich in Schließrichtung (S) eine Mehrzahl an Vorsprüngen (8, 8', 8") erstreckt, wobei die radial außenliegende Fläche des hülsenförmigen Abschnitts (7"') konisch (7"") ausgebildet ist.

7. Spritzgießmaschine nach einem der Ansprüche 1 bis 6, **dadurch gekennzeichnet, dass** die mindestens eine Ausnehmung (6, 6', 6") in radiale Richtung betrachtet hinterschnitten ausgebildet ist und dass der mindestens eine Vorsprung (8, 8', 8") eine der hinerschnittenen Form der Ausnehmung (6, 6', 6") angepasste Form aufweist.

8. Spritzgießmaschine nach einem der Ansprüche 1 bis 7, **dadurch gekennzeichnet, dass** der Aktuator (13) als hydraulisch betätigtes Element ausgebildet ist.

9. Spritzgießmaschine nach einem der Ansprüche 1 bis 8, **dadurch gekennzeichnet, dass** das kreisringförmige Steuerelement (12) als dünner Blechring ausgeführt ist.

10. Spritzgießmaschine nach einem der Ansprüche 1 bis 9, **dadurch gekennzeichnet, dass** die gelenkige Lagerung (14) Hebellaschen (15) umfasst, die über je einen Lagerpunkt (16, 17) mit dem Steuerelement (12) und dem Teil (7', 7") des Eingriffselements (7) verbunden sind.

11. Spritzgießmaschine nach Anspruch 10, **dadurch gekennzeichnet, dass** die Lagerpunkte (16, 17) einen sich in Schließrichtung (S) erstreckenden Lagerbolzen aufweisen.

12. Spritzgießmaschine nach einem der Ansprüche 1 bis 11, **dadurch gekennzeichnet, dass** in der Werkzeugaufspannplatte (2), in der die Verriegelungsmittel (5) nicht angeordnet sind, Mittel (18) zur Aufbringung der Werkzeugschließkraft angeordnet sind, die zwischen der Werkzeugaufspannplatte (2) und den Holmen (4) wirken.

13. Spritzgießmaschine nach Anspruch 12, **dadurch gekennzeichnet, dass** die Mittel (18) zur Aufbringung der Werkzeugschließkraft als hydraulische Druckdosen ausgebildet sind.

14. Spritzgießmaschine nach einem der Ansprüche 1 bis 13, **dadurch gekennzeichnet, dass** mehrere Verriegelungsmittel (5) der Spritzgießmaschine mit Kopplungsmitteln versehen sind, die eine synchrone Betätigung der Verriegelungsmittel (5) ermöglichen.

## Claims

1. Injection molding machine, comprising a machine bed (1) on which a stationary tool plate (2) is arranged, wherein furthermore a movable tool plate (3) is arranged on the machine bed (1) which is movable relatively to the first tool plate (2) in a closing direction (S), wherein a plurality of holms (4) are fixed at one of the tool plates (2) which can be latched for applying of a tool closing force relatively to the other tool plate (3) by means of locking means (5),
wherein the locking means (5) comprise:
- at least one reception (6, 6', 6") in the end region (19) of the holm (4),
- an engagement element (7) which has at least one projection (8, 8', 8") which can engage in the at least one reception (6, 6', 6") for fixing of the holm (4) relatively to the tool plate (3) which bears the engagement element (7),
wherein the engagement element (7) has at least two parts (7', 7"), wherein each part is rotatable supported around a pivot point (9, 10) and can carry out a rotation around an axis (A) which is directed in closing direction (S), wherein the engagement element (7) is arranged undisplacable in closing direction (S) in one of the tool plates (3) and wherein synchronisation means (11) are provided by which the pivot movement of the parts (7', 7") of the engagement element (7) around the axis (A) can be synchronized,
wherein the synchronization means (11) comprise a circular ring shaped control element (12) which can be rotated in circumferential direction (U) by an actuator (13), wherein the parts (7', 7") of the engagement element (7) are supported by means of a articulated bearing (14) at the control element (12).

2. Injection molding machine according to claim 1, **characterized in that** the engagement element (7) is designed as a screw nut which surrounds the end of the holm (4), wherein the engagement element (7) is especially designed bipartite.

3. Injection molding machine according to claim 1 or 2, **characterized in that** the engagement element (7) comprises a plurality of projections (8, 8', 8").

4. Injection molding machine according to claim 3, **characterized in that** the holm (4) comprises more receptions (6, 6', 6") than the number of projections (8, 8', 8") of the engagement element (7).

5. Injection molding machine according to one of claims 1 to 4, **characterized in that** the at least one reception (6, 6', 6") in the end region of the holm (4) is designed as a groove, especially as a ringshaped groove.

6. Injection molding machine according to one of claims 1 to 5, **characterized in that** the parts (7', 7") of the engagement element (7) comprise a sleeve-shaped section (7"') along which a plurality of projections (8, 8', 8") extend along the closing direction (S), wherein the radial outer area of the sleeve-shaped section (7"') is designed conical (7'"').

7. Injection molding machine according to one of claims 1 to 6, **characterized in that** the at least one reception (6, 6', 6") has an undercut seen in radial direction and that the at least one projection (8, 8', 8") has a shape adapted to the undercut shape of the reception (6, 6', 6").

8. Injection molding machine according to one of claims 1 to 7, **characterized in that** the actuator (13) is designed as hydraulically actuated element.

9. Injection molding machine according to one of claims 1 to 8, **characterized in that** the circular ring shaped control element (12) is designed as a thin metal sheet ring.

10. Injection molding machine according to one of claims 1 to 9, **characterized in that** the articulated bearing (14) comprises leverage flaps (15) which are connected via each one bearing point (16, 17) with the control element (12) and the part (7', 7") of the engagement element (7).

11. Injection molding machine according to claim 10, **characterized in that** the bearing points (16, 17) comprise a bearing bolt which extends in closing direction (S).

12. Injection molding machine according to one of claims 1 to 11, **characterized in that** in the tool plate (2), in which the locking means (5) are not arranged, means (18) for applying the tool closing force are arranged which act between the tool plate (2) and the holms (4).

13. Injection molding machine according to claim 12, **characterized in that** the means (18) for applying the tool closing force are designed as hydraulic force cartridges.

14. Injection molding machine according to one of claims 1 to 13, **characterized in that** several locking means (5) of the injection molding machine are provided with coupling means which allow a synchronous actuation of the locking means (5).

## Revendications

1. Machine à mouler par injection, comprenant un bâti de machine (1), sur lequel est disposée une plaque de serrage d'outil fixe (2), dans laquelle une plaque de serrage d'outil mobile (3) est disposée en plus sur le bâti de machine (1), qui est mobile dans une direction de fermeture (S) par rapport à la plaque de serrage d'outil fixe (2), dans laquelle plusieurs longerons (4) sont fixés à ladite une plaque de serrage d'outil fixe (2), qui peuvent être verrouillés au moyen de moyens de verrouillage (5) par rapport à l'autre plaque de serrage d'outil (3) en vue de l'application d'une force de fermeture d'outil,
dans laquelle les moyens de verrouillage (5) présentent:
- au moins un évidement (6, 6', 6") dans la région d'extrémité (19) du longeron (4),
- un élément d'engrènement (7), qui présente au moins une saillie (8, 8', 8"), qui peut s'engager dans ledit au moins un évidement (6, 6', 6") pour la fixation du longeron (4) par rapport à la plaque de serrage d'outil (3) portant l'élément d'engrènement (7),
dans laquelle l'élément d'engrènement (7) présente au moins deux parties (7', 7"), dans laquelle chaque partie est montée de façon rotative autour d'un point de rotation (9, 10) et peut effectuer une rotation autour d'un axe (A), qui est orienté dans la direction de fermeture (S), dans laquelle l'élément d'engrènement (7) est disposé de façon immobile dans la direction de fermeture (S) dans ladite une plaque de serrage d'outil (3), et dans laquelle il se trouve des moyens de synchronisation (11), avec lesquels le mouvement de pivotement des parties (7', 7") de l'élément d'engrènement (7) autour de l'axe (A) peut être synchronisé,
dans laquelle les moyens de synchronisation (11) présentent un élément de commande (12) en forme d'anneau circulaire, qui peut tourner dans la direction périphérique (U) au moyen d'un actionneur (13), dans laquelle les parties (7', 7") de l'élément d'engrènement (7) sont montées sur l'élément de commande (12) au moyen d'un appui articulé (14).

2. Machine à mouler par injection selon la revendication 1, **caractérisée en ce que** l'élément d'engrènement (7) est réalisé sous la forme d'un écrou entourant l'extrémité du longeron (4), dans laquelle l'élément d'engrènement (7) est réalisé en particulier en deux parties.

3. Machine à mouler par injection selon la revendication 1 ou 2, **caractérisée en ce que** l'élément d'engrènement (7) présente une multiplicité de saillies (8, 8', 8").

4. Machine à mouler par injection selon la revendication 3, **caractérisée en ce que** le longeron (4) présente plus d'évidements (6, 6', 6") que l'élément d'engrènement (7) ne présente de saillies (8, 8', 8").

5. Machine à mouler par injection selon l'une quelconque des revendications 1 à 4, **caractérisée en ce que** ledit au moins un évidement (6, 6', 6") dans la région d'extrémité du longeron (4) est creusé par tournage, en particulier sous forme de gorge annulaire.

6. Machine à mouler par injection selon l'une quelconque des revendications 1 à 5, **caractérisée en ce que** les parties (7', 7") de l'élément d'engrènement (7) présentent une partie en forme de douille (7"'), le long de laquelle une multiplicité de saillies (8, 8', 8") s'étendent dans la direction de fermeture (S), dans laquelle la face radialement extérieure de la partie en forme de douille (7'") est de forme conique (7"").

7. Machine à mouler par injection selon l'une quelconque des revendications 1 à 6, **caractérisée en ce que** ledit au moins un évidement (6, 6', 6") considéré en direction radiale est réalisé en contre-dépouille et **en ce que** ladite au moins une saillie (8, 8', 8") présente une forme adaptée à la forme en contre-dépouille de l'évidement (6, 6', 6").

8. Machine à mouler par injection selon l'une quelconque des revendications 1 à 7, **caractérisée en ce que** l'actionneur (13) est un élément à commande hydraulique.

9. Machine à mouler par injection selon l'une quelconque des revendications 1 à 8, **caractérisée en ce que** l'élément de commande en forme d'anneau circulaire (12) est réalisé sous forme d'anneau de tôle mince.

10. Machine à mouler par injection selon l'une quelconque des revendications 1 à 9, **caractérisée en ce que** l'appui articulé (14) comprend des lamelles de levier (15), qui sont reliées à l'élément de commande (12) et à la partie (7', 7") de l'élément d'engrènement (7) chaque fois par un point de palier (16, 17).

11. Machine à mouler par injection selon la revendication 10, **caractérisée en ce que** les points de palier (16, 17) présentent un axe de palier s'étendant dans la direction de fermeture (S).

12. Machine à mouler par injection selon l'une quelconque des revendications 1 à 11, **caractérisée en ce que** dans la plaque de serrage d'outil (2), dans laquelle les moyens de verrouillage (5) ne sont pas disposés, sont disposés des moyens (18) pour l'application de la force de fermeture d'outil, qui agissent entre la plaque de serrage d'outil (2) et les longerons (4).

13. Machine à mouler par injection selon la revendication 12, **caractérisée en ce que** les moyens (18) pour l'application de la force de fermeture d'outil sont réalisés sous forme de boîtes de pression hydrauliques.

14. Machine à mouler par injection selon l'une quelconque des revendications 1 à 13, **caractérisée en ce que** plusieurs moyens de verrouillage (5) de la machine à mouler par injection sont munis de moyens de couplage, qui permettent un actionnement synchrone des moyens de verrouillage (5).
